# EUROPEAN PATENT APPLICATION

(11) **EP 4 001 951 A1**
(43) Date of publication of application: **25.05.2022**
(21) Application number: 21208168.1
(22) Date of filing: 15.11.2021
(51) Int. Cl.: G01S 5/02, H04W 4/02

(54) **METHOD OF OPERATING A POSITIONING TAG, POSITIONING TAG AND COMPUTER PROGRAM PRODUCT**

(30) Priority: 16.11.2020 NL 2026901
(71) Applicant: Nedap N.V., 7141 DC Groenlo (NL)
(72) Inventor: VAN DIJK, Jeroen Martin, 7141 DC Groenlo (NL); DE PONT, Eva Teresa Francisca Pauline, 7141 DC Groenlo (NL)
(74) Representative: V.O.

(57) **Abstract**

The invention is directed at a method of operating a positioning tag in a positioning system, configured for receiving beacon signals transmitted by one or more beacons of the positioning system. The tags are further configured for determining a distance between the positioning tag and the beacon that transmitted the respective beacon signal. This enables position determination to obtain a relative position of the positioning tag. The method comprises determining a current general signal strength value indicative of a general signal strength of electromagnetic activity, and compare the current general signal strength value with a previous general signal strength value obtained during an earlier determination step. In a memory, the previous general signal strength value is updated with the current determined general signal strength value. The method then returns to the step of determining the current general signal strength value. The method also comprises, dependent on the step of comparing, perform the position determination if a result of the step of comparing is indicative of a change in the general signal strength, and maintain a previous determined relative position of the positioning tag if the result of the step of comparing is not indicative of the change in the general signal strength.

## Description

### Field of the invention

The present invention is directed at a method of operating a positioning tag in a positioning system, wherein the positioning tag is configured for receiving beacon signals transmitted by one or more beacons of the positioning system, and for determining, for each received beacon signal, a distance between the positioning tag and the beacon that transmitted the respective beacon signal, for enabling a position determination such as to obtain a relative position of the positioning tag with respect to the one or more beacons. Furthermore, the invention is directed at a positioning tag and a computer program product.

### Background

In modern animal management, positioning tags are typically applied for tracking the positions of animals. For example, this enables the farmer to be aware of the location of a herd or of individual animals. The positioning tags are attached to the animals, e.g. in a neck label, an ear label, a leg label or some other tag or sensor system worn by the animal. Various types of systems are available that provide such functionality, and they may be based on different kinds of technology, like RFID, Wifi, Bluetooth, or ZigBee. Also, these systems are available for both outdoor and indoor use. Outdoor use typically allows the tracking of animals over long distances, whereas indoor use enables easy tracking of animals in a shed, for example. These systems further enable position dependent animal management automation, such as automatic separator gates or milking parlors.

Because the positioning tags are wireless devices which are to be designed for carrying along for an extended period, the tags need to be designed in an energy efficient manner. For example, where the tags apply radio frequency identification (RFID) technology, use can be made of passive RFID tags which draw their energy supply from electromagnetic fields in their vicinity. As may be appreciated, only limited amounts of energy can be drawn in this manner, which in turn limits the number and kind of functions available through passive RFID. More sophisticated tags that are still based on RFID technology, include a battery, solar cell or other power supply in order to apply active RFID or hybrid RFID technology. The availability of a power source enables to extend the functionality of tags, e.g. in order to increase their distance range, their transmission data rate or to allow the tags to include sensor devices, a faster or more powerful controller, or a global positioning system. Regardless of their functionality, however, efficient energy usage is still an important requirement to design these tags for providing a long life duration, using a minimal size power source and thereby minimizing the size of the tags and increasing the comfort of the animal wearing it.

### Summary of the invention

It is an object of the present invention to provide a method as described above, which enables to further decrease energy use by the positioning tags.

To this end, in accordance with a first aspect, there is provided herewith a method as described above, wherein the method comprises: determining, a current general signal strength value indicative of a general signal strength of electromagnetic activity; compare the current general signal strength value with a previous general signal strength value obtained during an earlier determination step; and return to the step of determining the current general signal strength value; wherein the method further comprises, dependent on the step of comparing, perform the position determination if a result of the step of comparing is indicative of a change in the general signal strength, and maintain a previous determined relative position of the positioning tag if the result of the step of comparing is not indicative of the change in the general signal strength..

The method of present invention is based on the insight that energy usage of the positioning tags can be greatly improved by making the position determination process conditional on the detection of any changes in electromagnetic activity. As long as the positioning tag stays in a same position, the electromagnetic activity will not significantly change, save for sudden unexpected and relatively infrequently occurring events may be. Therefore, during most of the time, the determined general signal strength value will not change, and if a change is detected then this will most frequently be due to a change in position of the tag. Therefore, by reducing the number of times wherein a positioning tag will recalculate and update its own position, in a system wherein tags are designed to do this autonomically, energy usage by the positioning tag can be effectively saved and reduced. In those rare events where some electromagnetic disturbance causes a change in the determined general signal strength in absence of a change of the tag position, at worst the position of the positioning tag will be updated once too many. However, given the amount of energy saved by reducing the number of times wherein the position is determined, the advantages are significant.

In some embodiments, for performing the comparison, the change in general signal strength is detected when a difference between the current general signal strength value and the previous general signal strength value exceeds a threshold value. In these embodiments, the position of the positioning tag will only be determined in case the change in general signal strength measured through the antenna of the positioning tag will be large enough in order to exceed the threshold value. This will prevent that very small changes in electromagnetic activity will trigger the positioning tag to determine its position too often, such that the advantages of the present invention would be diminished. By using a predetermined threshold value, it can be ensured that only in cases where a significant change of position is detected, the positioning tag will determine an update of its current location.

In some embodiments, the positioning tag comprises an antenna for receiving the beacon signals, and the step of determining the current general signal strength value comprises a step of determining the current general signal strength value indicative of said general signal strength of electromagnetic activity across at least a part or all of a full bandwidth of the antenna. Here, for example the total amount of energy received through the antenna of the positioning tag, across the full bandwidth thereof, will be measured and used to indicate whether or not the positioning tag may have been moving to a new location. However in some cases, filters or other signal modulation components may enable that the signal strength in only a part of the full bandwidth of the antenna is measured in order to determine whether or not the positioning tag has moved. Yet in some embodiments, determining the current general signal strength value indicative of the general signal strength of electromagnetic activity is performed in a pre-determined frequency channel or across a pre-determined frequency range. For example, the energy present in a specific frequency channel or frequency range may be analyzed by a controller to determine whether it is likely that the positioning tag has moved. The exclusion of part of the bandwidth or the inclusion of just a certain channel may likewise prevent the positioning tag from responding too early to a change in electromagnetic activity. For example, if only the general signal strength value in the frequency channel wherein the beacon signals are transmitted is being measured, this prevents the triggering of a recalculation of the location of the positioning tag in case a different electromagnetic disturbance causes the electromagnetic activity elsewhere in the bandwidth to change. Suppose that a large metal object would temporarily move between a cow and one of the beacons, then temporarily this may affect the receipt of signals, which in a part of the bandwidth will be diminished. These, for example, are the frequencies providing a wavelength that matches with the dimensions of the large metal object. Therefore, the total electromagnetic activity across the full bandwidth may temporarily diminish without the animal moving. If only a measurement is performed at a pre-determined frequency channel, where the presence of the large metal object has an insignificant effect on the signal strength, the moving of the large metal object in between the cow and the beacon will not trigger the calculation of a new location of the positioning tag.

Typically, however, the determining of electromagnetic activity across the full bandwidth is more easy to realize on the positioning tag, because this does not require any frequency dependent filtering or other analysis techniques in order to evaluate the measurement. Simply, the total amount of electromagnetic energy received via the antenna can be measured and can be used as an indication of whether or not it is likely that the positioning tag has moved. Naturally, there will be occasions such as the one described above that may temporarily affect the total amount of electromagnetic energy received by the antenna, without the animal having moved. In the worst case, this will trigger an unnecessary determination of the location of the positioning tag. However, due to the fact that the number of recalculations of the location of the positioning tag is greatly reduced by preventing the updating of the location for as long as the electromagnetic activity is stable, an occasional superfluous calculation of the location of the positioning tag will not be of large impact on the battery life as a whole.

In accordance with some embodiments, the steps of determining and comparing the current general signal strength value and the previous general signal strength value are repeated during an operation of the positioning tag. Advantageously, during the operation of the positioning tag these steps are constantly looped such that continuously the positioning tag monitors changes in the electromagnetic activity.

In some embodiments, the steps of determining and comparing are performed intermittently. For example, occasionally these three steps are repeated by the positioning tag in order to intermittently determined whether a new determination of the position of the positioning tag is necessary.

In accordance with some of these embodiments, the steps of determining and comparing the current general signal strength value the previous general signal strength value are performed at pre-determined time intervals wherein the time intervals are fixed or variable. For example, the time intervals can be programmed into the positioning tag to be performed once every, e.g. half second, second, 10 seconds, etc.

In accordance with some embodiments, the positioning tag is configured for obtaining an acceleration signal from an accelerometer, such as a G-sensor, and wherein the steps of determining and comparing the current general signal strength value are performed when the acceleration signal is indicative of a movement of the positioning tag. In these embodiments, the occurrence of an acceleration signal is used as a trigger for performing the above-mentioned steps of determining and comparing a current general signal strength value, and updating of the previous general signal strength value. Here, after receiving an acceleration signal, the steps of determining, comparing, and updating are performed in order to further investigate whether the occurrence of the acceleration signal was due to some movement of the animal's body (without a displacement of the positioning tag) or due to the fact that the animal has actually moved or is moving. The use of an accelerometer and the acceleration signal as a trigger for conducting a determination of the new position of the positioning tag, even without implementation of the above described method including the steps of determining, comparing and updating, may likewise be applied in order to reduce the amount of power consumed by the positioning tag.

In some embodiments, the method may be implemented by obtaining a new general signal strength value to be used as current general signal strength value, and compare this current general signal strength value with the previous general signal strength value that is still available to the controller (e.g. temporary stored in a buffer or maintained by the controller itself). The tag then responds to momentary changes in the general signal strength value by performing position determination only if a change (or, in some embodiments, a significant change exceeding a threshold) is detected. In some embodiments, however, the method further comprises a step of storing, in a memory, the current general signal strength value. Alternatively or additionally, the method in accordance with some embodiments may comprise a step of update, in a memory, the previous general signal strength value with the current determined general signal strength value. The additional steps of storing and/or updating, enable to keep track of the changes in signal strength, and also enable to detect a change in signal strength over several determination steps (i.e. over a longer time period). For example, the tag may ignore small changes in signal strength, but respond only in case the small changes aggregate into a more significant change in order to perform position determination. In some embodiments, the step of storing or updating is performed if a difference between the current general signal strength value and the previous determined general signal strength value exceeds the threshold value mentioned earlier.

In some embodiments, the one or more beacons include at least one of: base stations or fixed transmitters of the positioning system, or one or more further positioning tags present in the positioning system. The method may be applied in an animal positioning system comprising tags that determine their position based on beacon signals obtained from one or more fixed beacons or base stations. However, some embodiments include systems wherein relative positioning is performed in relation to other tags.

In some of the embodiments, the positioning tag is configured for being attached to an animal such as to be indicative of the position of the animal. Although this is particularly advantageous for use in an animal management system, the skilled person may appreciate that the present invention can likewise be applied in other fields of use where positioning tags are used in order to track the locations of objects or animals. For example, without the presence of an animal management system, the location of an animal in a certain area, e.g. a forest or a mountain range, can be tracked in this manner. Furthermore, also the exact positions of objects in a storage facility or containers in a harbor may be tracked in this way, in order to save energy consumption by the positioning tags applied to these objects.

In accordance with a second aspect, the invention provides a positioning tag for use in a positioning system, wherein the positioning tag comprises an antenna for receiving beacon signals transmitted by one or more beacons of the positioning system, a memory, and a controller, wherein the controller is configured for determining, for each received beacon signal, a distance between the positioning tag and the beacon that transmitted the respective beacon signal, for enabling a position determination such as to obtain a relative position of the positioning tag with respect to the one or more beacons, wherein the controller is further configured for performing the steps of: determining, a current general signal strength value indicative of a general signal strength of electromagnetic activity; compare the current general signal strength value with a previous general signal strength value stored in the memory, wherein the previous general signal strength value is obtained during an earlier determination; and return to the step of determining the current general signal strength value; wherein the controller is further configured for performing, dependent on the step of comparing, the position determination if a result of the step of comparing is indicative of a change in the general signal strength, and maintain a previous determined relative position of the positioning tag if the result of the step of comparing is not indicative of the change in the general signal strength.

The above-mentioned positioning tag can be used in combination with the method in accordance with the first aspect. In some embodiments, the memory may be at least one of a data buffer, a cache memory, or a volatile memory, for storing one or more of the previous general signal strength values for use during the step of comparing; or a data memory suitable for keeping record of general signal strength history data, suitable for maintaining a log of the previous general signal strength values. In one of the above alternatives, the data memory is suitable for keeping a lock of the previous general signal strength values. This information may for example be used in order to backwards track a location where the animal has been, or for other purposes.

In some of the above embodiments, the tag further comprises powering means for powering the positioning tag, wherein the powering means comprise at least one of: a battery, a solar cell, or a radio frequency powering circuit for harvesting power from electromagnetic signals received via the antenna or a coil.

In accordance with a third aspect, there is provided a computer program conduct suitable for being loaded into the memory of a positioning tag of a positioning system, comprising instructions which when loaded into the memory cause a controller of the positioning tag to perform a method in accordance with the first aspect.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 schematically illustrates a cow positioning system suitable for implementing the present invention;
Figure 2 schematically illustrates a field map for illustrating the method in accordance with an embodiment of the present invention;
Figure 3 schematically illustrates a method in accordance with an embodiment of the present invention;
Figure 4 schematically illustrates a positioning tag in accordance with an embodiment of the present invention;
Figure 5 schematically illustrates a further positioning tag in accordance with an embodiment of the present invention;
Figure 6 schematically illustrates a method in accordance with an embodiment of the present invention.

### Detailed description

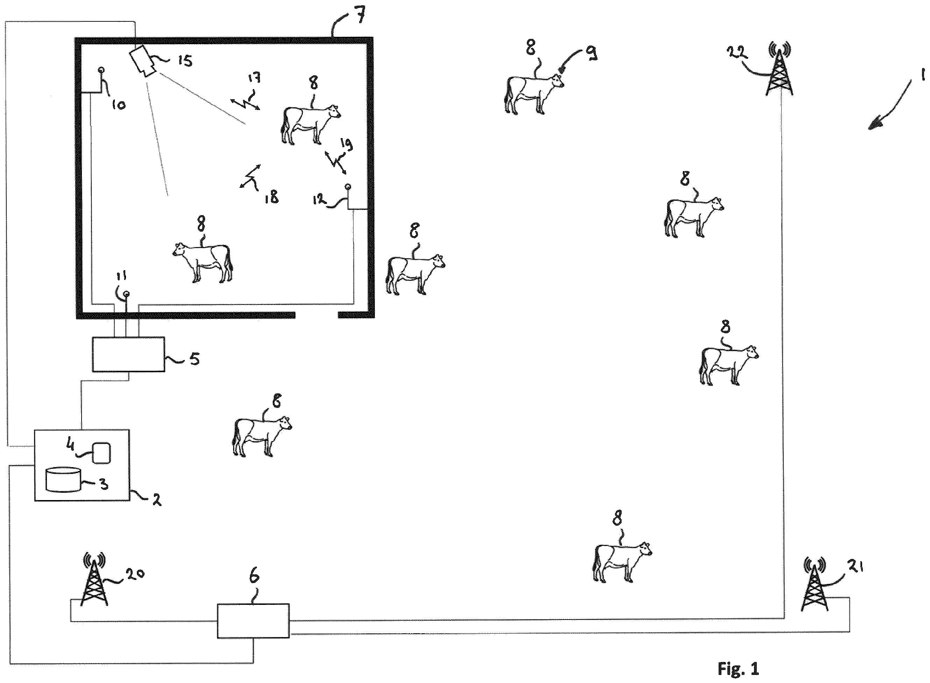

In figure 1, an animal management system 1 including an animal positioning system is schematically illustrated. The system 1 comprises a central server 2 including a controller 4 and a memory 3. In figure 1, the memory 3 is schematically illustrated as an internal memory to the server 2, however the skilled person may appreciate that the memory 3 may be a cloud storage facility or any other type of external memory to the server 2. Furthermore, the system 1 may comprise a plurality of different animal management devices and subsystems which are not illustrated in figure 1. The system 1 further includes an indoor cow positioning system 5 and an outdoor cow positioning system 6. A plurality of cows 8 are illustrated in figure 1 located at various locations around the farm. The farm includes a shed or other building 7 to which the cows 8 have access. The indoor positioning system 5 includes a plurality of beacons 10, 11 and 12. Furthermore, the outdoor positioning system 6 also includes a plurality of beacons 20, 21 and 22. Typically, the beacons of the indoor cow positioning system 5 and the outdoor cow positioning system 6 may operate using different technologies. However, typically these animal positioning systems such as the cow positioning system 6 operate using RFID technology implemented in animal worn tags or labels 9. These tags or labels may be ear labels or ear tags, neck labels, leg labels, tail labels, or any other type of sensors (e.g. a stomach bolus) that may be worn by the animals 8. In figure 1, a possible location of one of the labels 9 has been illustrated on one of the cows 8. The skilled person may appreciate that the invention is not limited to any specific type of labels.

In the example of labels operating using RFID technology for determining the locations of the cows 8, it may be appreciated that the requirements for the indoor cow positioning system 5 are different than for the outdoor cow positioning system 6. For example, the indoor system 5 needs to be accurate over short distances, and is subject to reflection against walls and objects indoor. On the other hand, the outdoor cow positioning system 6 needs to accurate over large distances, and the objects that may affect the receipt of signals may be of different size and materials. Therefore, the indoor cow positioning system 5 and the outdoor cow positioning system 6 may each operate at their own operational frequencies within the RFID standard. For example, the outdoor cow positioning system 6 may operate at an UHF frequency of e.g. 433MHz or within the range of 860-930MHz. The detection range of labels transmitting at these frequencies will be typically up to 1km for active RFID labels. In principle, these frequencies may also be used for the indoor positioning system 5. However, the wavelength at the above mentioned UHF frequencies, more generally within the frequency range of 300MHz to 3GHz, will be from 0.1 to 1.0 meter. This means that objects having a typical size between ten centimeter and one meter (e.g. many farm animals fall within this range) will interfere with these signals, and will thus hamper the receipt thereof. Although interference may to some extent be resolved, it is also possible to use a different frequency. For indoor systems, different frequencies may typically be applied with RFID. For example, an indoor system operating within a range of 40 to 60 kHz may be applied, or more preferred a within a range of 50 to 55 kHz. The invention is not limited to this range. For example, closer to the above outdoor range, an indoor system using 13.56MHz will have a longer wavelength of around 22 meter, and therefore, interference with objects having typical dimensions of one meter will not have a significant impact on the receipt of these signals. The distance range of receipt will be shorter than in the UHF band, but because these signals are used indoor, the range requirements in terms of distances are more relaxed. The skilled person will appreciate that different frequencies may be applied when implementing the various animal positioning systems 5 and 6. The systems may both operate at 433MHz, or may operate at different frequencies dependent on the need.

In figure 1, the central server 2 of the animal management system 1 is further connected to a camera 15 within shed 7 to monitor the cattle. This is not an essential part of the system.

The locations of each of the cows 8 can be found by triangulation of the transmitted signals from the labels 9. For example, the received signal strength indicator (RSSI) which indicates at which strength a signal transmitted by label 9 is received, for example by the beacons 20, 21 and 22 of the outdoor positioning system 6, may be used and compared to calculate the location of the cow 8 by triangulation. Also in the indoor cow positioning system 5, triangulation based on the RSSI may be applied to determine the exact location of the cow 8. In figure 1, the positioning tag 9 worn by one of the cows 8 in the shed 7 transmits a signal which is received by each of the beacons 10, 11 and 12. The received signal has been designated with double arrows 17, 18 and 19 for each of the beacons 10, 11 and 12. From the received signals 17, 18 and 19 of the beacons 10, 11 and 12 respectively, the received signal strength indicator may be compared to determine by triangulation the exact location of the cow 8. Alternatively, it is also possible to use the time of flight of a signal transmitted by a label 9, in case the exact time of transmitting the signal is known.

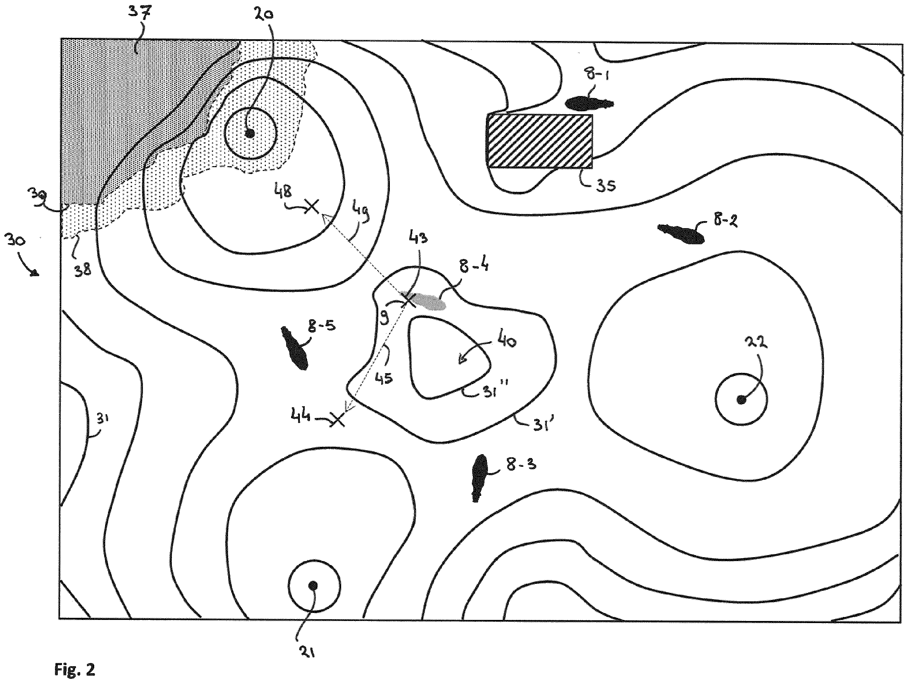

Figure 2 schematically illustrates the method of the present invention by showing a field map indicating the level of electromagnetic activity for an outdoor cow positioning system. Figure 2 illustrates an area 30 which includes the beacons 20, 21, and 22. The beacons may transmit a beacon signal which thereby locally increases the electromagnetic activity around the beacons 20, 21 and 22. The lines 31 in figure 2 are equipotential lines, which are the lines indicating an even level of electromagnetic activity. The maximum amount of electromagnetic activity can be found around the beacons 20, 21 and 22. In between the beacons 20, 21 and 22, the amount of electromagnetic activity may gradually decrease, but at some point the fields of the beacons 20, 21 and 22 will overlap to thereby locally increase the potential e.g. in area 40. Furthermore, in the area 30 there may be certain structures or landscape features that influence the electromagnetic fields. For example, a barn 35 is illustrated in area 30, which may be made of a metal structure with stone walls. This will influence the electromagnetic fields such that cow 8-1 being located behind the barn 35, will be in a local minimum of electromagnetic activity. Also the hill 37 illustrated by hide lines 38 and 39 may shield the area from the electromagnetic field of beacon 20. Therefore, the equipotential lines between beacon 20 and hill 37 are closer to each other. Clearly, as illustrated in figure 2, the level of electromagnetic activity is different in any location on the map 30. In the area 30, the cows 8-1, 8-2, 8-3, 8-4 and 8-5 are illustrated. Each of the cows 8-1 to 8-5 wears a label 9, which may be for example a neck label. In figure 2, for cow 8-4, the exact location 43 of neck label 9 is marked by a cross.

In accordance with the present invention, the method for performing positioning measurements includes the step of determining a current general signal strength value which is indicative of general signal strength of the electromagnetic activity locally where the label 9 resides at that moment. Therefore, in location 43 marked on the map, where the neck label 9 of cow 8-4 resides at that moment, a determination is performed of the general signal strength of electromagnetic activity. This general signal strength will be somewhere between the potentials of equipotential lines 31' and 31". This determination maybe performed continuously or intermittently. For example, this determination may be performed once every minute or once every ten seconds or ones every second or at any other interval which may be predetermined by the operator. The determined current general signal strength value, in accordance with the method of the invention, may be compared with a previous general signal strength value which is obtained during an earlier determination step. As long as there is no change in the general signal strength value (the current general signal strength value and the previous general signal strength value are at the same level, or differ an insignificant amount which is smaller than a threshold value), the result of the comparison will be that there is no change in the general signal strength value during that monitoring step. In that case, the previous general signal strength value will not be updated with a determined current general signal strength value and the method may continue simply by maintaining the previous determined relative position of the positioning tag. In other words, no new position determination is carried out as long as the general signal strength value does not change (or does not change too much). The step of updating the previous general signal strength value may even be optional, in the sense that for example only an update is carried out as soon as the general signal strength value which is determined as the current general signal strength value, differs more than an insignificant amount from the previous general signal strength value: in other words, the update in that case is only carried out as soon as an update of the position of cow 8-4 is required. This latter embodiment of the invention may be advantageous to prevent that the position of the cow will not be updated if the cow 8-4 moves very slowly to a new location.

Typically, if the comparison step makes clear that the current general signal strength value which is determined for cow 8-4 has changed, the position of cow 8-4 needs to be updated, and the positioning tag performs a position determination using triangulation of the beacon signals 20, 21 and 22. For example, if the cow 8-4 walks to the new location 44 in figure 2, following path 45, it can be seen that general signal strength of electromagnetic activity will change while cow 8-4 is moving. Therefore, in that case, the comparison step will yield that an update of the position of cow 8-4 is required and the positioning tag will perform a new position determination step. If cow 8-4 moves from position 43 to position 48, it can be seen that the electromagnetic activity will decrease first and thereafter strongly increase while cow 8-4 approaches the beacon 20 via the path 49. In position 48, the level of electromagnetic activity is relatively strong due to the presence of beacon 20.

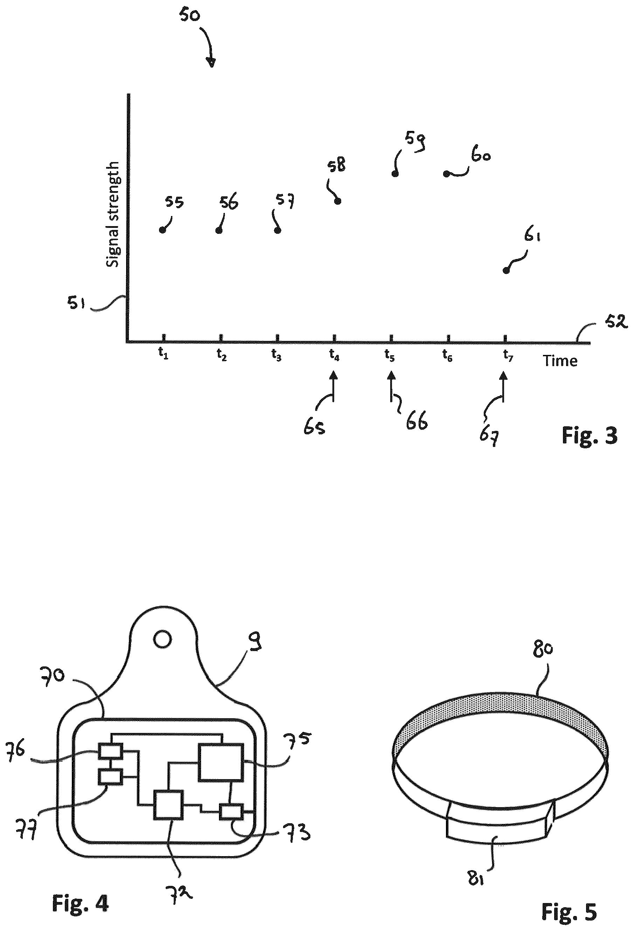

A hypothetical signal strength graph is illustrated in figure 3 in order to further illustrate the method in accordance with the present invention. In figure 3, the graph 50 shows on the vertical axis 51 the signal strength, and on the horizontal axis 52 the time. At times t₁, t₂ and t₃, in points 55, 56 and 57, it can be seen that the positioning tag 9 stays in the same position. The level of electromagnetic activity does not change too much between times t₁ and t₃. Thereafter, a significant change at times t₄ and t₅ is detected in the level of electromagnetic activity indicated by points 58 and 59 in the graph. Therefore the arrows 65 and 66 indicate the times wherein a position determination is carried out by the positioning tag using triangulation beacon signals for example. Next at time t₆, it can be seen that the general signal strength value 60 has not changed from the previous value 59. Again, no update of the position of positioning tag 9 will be carried out. At time t₇, a sudden decrease of the electromagnetic activity 61 may be detected and an update of the position will be performed at time t₇. It may be the case that the updated position determination in 67 will yield that the position of a cow 8 wearing the positioning tag 9 has not really changed. This may happen, for example in case between time t₆ and t₇ the cow has made a movement without displacing. For example, the cow suddenly starts eating putting his head down in a location which is relatively shielded from electromagnetic radiation. Another possibility is that the cow 8 has decided to lie down and the neck label 9 is close to the ground. Clearly, as follows from figure 3, the number of times wherein a position determination has to be carried out is greatly reduced by monitoring the electromagnetic activity.

Figure 4 schematically illustrates an ear label 9 that may be used to carry out the method of the present invention. In the ear label 9, a controller 72 is connected to a plurality of sensors 76 and 77, and communication chip 73 attached to an antenna 70 for RFID. The tag 9 further includes a power supply 75 which supplies the controller 72, the sensors 76 and 77 and the RFID chip 73 with power. The controller may be configured for performing a triangulation of beacon signals for determining the position of positioning tag 9. The elements 70, 72, 73, 75, 76 and 77 may alternatively be implemented on a neck label, schematically illustrated in figure 5. Figure 5 illustrates a neck label 80 including a housing 81 bearing the elements 70 through 77 (not visible in figure 5). As may be appreciated, the positioning tag 9 may further be provided by different types of labels, such as a leg label or a tail label.

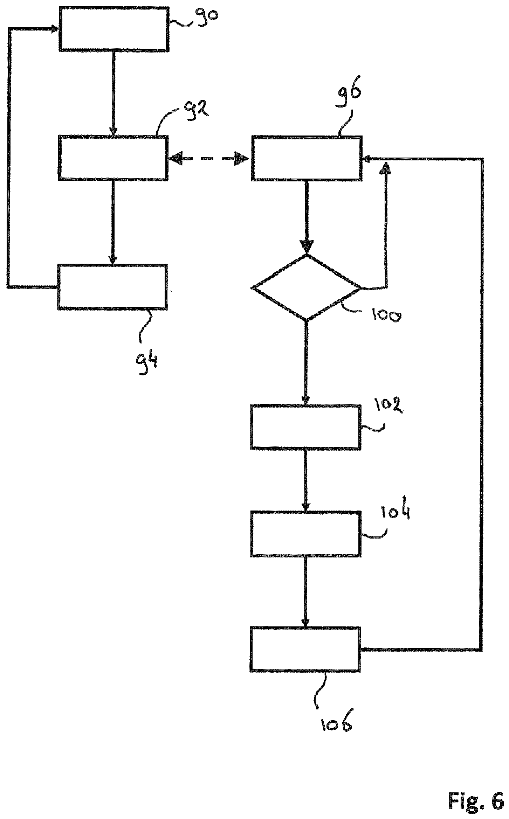

Figure 6 schematically illustrates the method steps to the present invention in accordance with one embodiment thereof. In figure 6, step 90 indicates the determination of the current signal strength value which is indicative of a general signal strength of electromagnetic activity in the vicinity of the positioning tag 9. Step 92 provides the comparing step wherein the current general signal strength value determined in step 90 is compared to a previous general signal strength value which for example may be stored in a memory or buffer of the positioning tag 9. Thereafter, in step 94, the previous general signal strength value in memory is updated using the current general signal strength value determined in step 90, preferably if the change in general signal strength value is significant, e.g. larger than a threshold. The method loops back to step 90 such that the monitoring of changes in electromagnetic activity is performed continuously or intermittently. For example, a time loop may be optionally present between steps 94 and 90 such that step 90 is carried out only after a predetermined amount of time. The comparing step 92 is performed in step 96 by determining the difference between the current general signal strength value and the previous general signal strength value. In decision step 100 it is determined whether the difference determined in step 96 is above or below a threshold level. If the difference determined in step 96 is below a threshold level, no action is taken, and the system simply waits for the next comparison step 92 to be carried out. If in step 100 it is determined that the difference between the current general signal strength value and a previous value is above the threshold, then in step 102 the received signal strength indicators of the beacon signals are determined, and in step 104 a triangulation is carried out in order to yield a new position of the positioning tag. In step 106, the new position determined in step 104 is updated in the memory of the positioning tag, or is further processed dependent on the needs. Thereafter, the method returns to step 96 and will wait for a new comparison step to be carried in step 92.

The present invention has been described in terms of some specific embodiments thereof. It will be appreciated that the embodiments shown in the drawings and described herein are intended for illustrated purposes only and are not by any manner or means intended to be restrictive on the invention. The context of the invention discussed here is merely restricted by the scope of the appended claims.

## Claims

1. Method of operating a positioning tag in a positioning system, wherein the positioning tag is configured for receiving beacon signals transmitted by one or more beacons of the positioning system, and for determining, for each received beacon signal, a distance between the positioning tag and the beacon that transmitted the respective beacon signal, for enabling a position determination such as to obtain a relative position of the positioning tag with respect to the one or more beacons, wherein the method comprises:
determining, a current general signal strength value indicative of a general signal strength of electromagnetic activity;
compare the current general signal strength value with a previous general signal strength value obtained during an earlier determination step; and
return to the step of determining the current general signal strength value;
wherein the method further comprises, dependent on the step of comparing, perform the position determination if a result of the step of comparing is indicative of a change in the general signal strength, and maintain a previous determined relative position of the positioning tag if the result of the step of comparing is not indicative of the change in the general signal strength.

2. Method according to claim 1, wherein for performing the comparison, the change in general signal strength is detected when a difference between the current general signal strength value and the previous general signal strength value exceeds a threshold value.

3. Method according to claim 1 or 2, wherein the positioning tag comprises an antenna for receiving the beacon signals, and wherein the step of determining the current general signal strength value comprises at least one of:
determining the current general signal strength value indicative of said general signal strength of electromagnetic activity across at least a part or all of a full bandwidth of the antenna; or
determining the current general signal strength value indicative of said general signal strength of electromagnetic activity is in a predetermined frequency channel or across a predetermined frequency range.

4. Method according to any one or more of the preceding claims, wherein the steps of determining and comparing the current general signal strength value are repeated during operation of the positioning tag.

5. Method according to claim 4, wherein the steps of determining and comparing the current general signal strength value are performed intermittently.

6. Method according to claim 5, wherein the steps of determining and comparing the current general signal strength value are performed at predetermined time intervals, wherein the time intervals are fixed or variable.

7. Method according to claim 5 or 6, wherein the positioning tag is configured for obtaining an acceleration signal from an accelerometer, such as a G-sensor, and wherein the steps of determining and comparing the current general signal strength value are performed when the acceleration signal is indicative of a movement of the positioning tag.

8. Method according to any one or more of the preceding claims, wherein the method further comprises a step of:
storing, in a memory, the current general signal strength value; or
update, in a memory, the previous general signal strength value with the current determined general signal strength value.

9. Method according to claims 2 and 8, wherein the step of storing or updating is performed if a difference between the current general signal strength value and the previous determined general signal strength value exceeds the threshold value.

10. Method according to any one or more of the preceding claims, wherein the one or more beacons include at least one of: base stations or fixed transmitters of the positioning system, or one or more further positioning tags present in the positioning system.

11. Method according to any one or more of the preceding claims, wherein the positioning tag is configured for being attached to an animal, such as to be indicative of the position of the animal.

12. Positioning tag for use in a positioning system, wherein the positioning tag comprises an antenna for receiving beacon signals transmitted by one or more beacons of the positioning system, a memory, and a controller,
wherein the controller is configured for determining, for each received beacon signal, a distance between the positioning tag and the beacon that transmitted the respective beacon signal, for enabling a position determination such as to obtain a relative position of the positioning tag with respect to the one or more beacons,
wherein the controller is further configured for performing the steps of:
determining, a current general signal strength value indicative of a general signal strength of electromagnetic activity;
compare the current general signal strength value with a previous general signal strength value stored in the memory, wherein the previous general signal strength value is obtained during an earlier determination; and
return to the step of determining the current general signal strength value;
wherein the controller is further configured for performing, dependent on the step of comparing, the position determination if a result of the step of comparing is indicative of a change in the general signal strength, and maintain a previous determined relative position of the positioning tag if the result of the step of comparing is not indicative of the change in the general signal strength.

13. Positioning tag according to claim 12, wherein the controller is further configured for at least one of:
storing the current determined general signal strength value in the memory; or
updating the previous general signal strength value that is stored in the memory with the current determined general signal strength value, for use thereof as a previous general signal strength value in a subsequent determination.

14. Positioning tag according to claim 12 or 13, wherein the memory is at least one of:
a data buffer, a cache memory, or a volatile memory, for storing one or more of the previous general signal strength values for use during the step of comparing; or
a data memory suitable for keeping record of general signal strength history data, suitable for maintaining a log of the previous general signal strength values.

15. Positioning tag according to any one or more of claims 12-14, further comprising powering means for powering the positioning tag, the powering means comprising at least one of: a battery, a solar cell, or a radio frequency powering circuit for harvesting power from electromagnetic signals received via the antenna or a coil.

16. Positioning tag according any one or more of claims 12-15, wherein for performing the comparison, the controller is configured for detecting the change in general signal strength when a difference between the current general signal strength value and the previous general signal strength value exceeds a threshold value.

17. Positioning tag according to any one or more of claims 12-16, wherein the controller is configured for performing the step of determining the current general signal strength value by at least one of:
determining the current general signal strength value indicative of said general signal strength of electromagnetic activity across at least a part or all of a full bandwidth of the antenna; or
determining the current general signal strength value indicative of said general signal strength of electromagnetic activity is in a predetermined frequency channel or across a predetermined frequency range.

18. Positioning tag according to any one or more of the claims 12-17, wherein the controller is configured for at least one of:
repeating the steps of determining, comparing and storing the current general signal strength value during operation of the positioning tag;
performing the steps of determining, comparing and storing the current general signal strength value intermittently, such as at predetermined time intervals, or with time intervals that are fixed or variable.

19. Positioning tag according to any one or more of the claims 12-18, wherein the controller is configured for performing the steps of determining, comparing and storing the current general signal strength value intermittently,
wherein the tag comprises an accelerometer for providing an acceleration signal, and wherein the controller is configured for performing the steps of determining, comparing and storing the current general signal strength value when the acceleration signal is indicative of a movement of the positioning tag.

20. Positioning tag according to any one or more of the claims 12-19, wherein the positioning tag is configured for being attached to an animal, such as to be indicative of the position of the animal.

21. Positioning tag according to any one or more of the claims 12-20, wherein the positioning tag is configured for transmitting beacon signals such as to enable use of the positioning tag as a beacon in a method according to any one or more of the claims 1-11.

22. Computer program product suitable for being loaded into the memory of a positioning tag of a positioning system, comprising instructions which when loaded into the memory cause a controller of the positioning tag to perform a method according to any of the claims 1-11.
